# EUROPÄISCHE PATENTANMELDUNG

(11) **EP 1 763 147 A1**
(43) Veröffentlichungstag der Anmeldung: **14.03.2007**
(21) Anmeldenummer: 05019433.1
(22) Anmeldetag: 07.09.2005
(51) Int. Cl.: H04B 1/713, H04L 5/02

(54) **Sprungsequenzen für Interleaved OFDMA und für IFDMA**

(71) Anmelder: SIEMENS AKTIENGESELLSCHAFT, 80333 München (DE)
(72) Erfinder: Costa, Elena, Dr., 81739 München (DE); Frank, Tobias, 35305 Grünberg (DE); Klein, Anja, Prof., 64287 Darmstadt (DE); Schulz, Egon, Dr., 80993 München (DE)

(57) **Zusammenfassung**

Die Erfindung betrifft ein Verfahren zur Kommunikation in einem Funkkommunikationssystem, in welchem zur Kommunikation zwischen einer netzseitigen Funkstation (BS) und Teilnehmerstationen (MS1. MS2, MS3) ein in eine Mehrzahl von Subbändern aufgeteiltes Frequenzband verwendet wird. Die netzseitige Funkstation (BS) kommuniziert mit einer Teilnehmerstation (MS1, MS2, MS3) unter gleichzeitiger Verwendung einer Teilmenge der Subbänder, wobei es sich bei den Subbändern der Teilmenge um im Frequenzbereich durch jeweils die gleiche Anzahl von Subbändern voneinander beabstandete Subbänder handelt. Erfindungsgemäß wechseln die zur Kommunikation verwendeten Subbänder gemäß einer Sprungsequenz unter Beibehaltung der Beabstandung.

## Beschreibung

Die Erfindung betrifft ein Verfahren zur Kommunikation in einem Funkkommunikationssystem, in welchem ein in eine Mehrzahl von Subbändern aufgeteiltes Frequenzband verwendet wird.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme, zum Beispiel nach den bekannten Standards GSM (Global System for Mobile Communication) oder UMTS (Universal Mobile Telecommunications System), mit einer Netzinfrastruktur bestehend zum Beispiel aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie zum Beispiel die Kombination eines Frequenzbereichs-Vielfachzugriffsverfahrens mit einem Codebereichs-Vielfachzugriffsverfahren.

Um eine möglichst effiziente Übertragung von Daten zu erreichen, zerlegt man das gesamte zur Verfügung stehende Frequenzband in mehrere Subbänder (Multicarrier- bzw. Mehrträgerverfahren). Die den Mehrträgersystemen zugrunde liegende Idee ist es, das Ausgangsproblem der Übertragung eines breitbandigen Signals in die Übertragung mehrerer schmalbandiger Signale zu überführen. Dies hat unter anderem den Vorteil, dass die am Empfänger erforderliche Komplexität reduziert werden kann. Ferner ermöglicht die Aufteilung der verfügbaren Bandbreite in mehrere schmalbandige Subbänder eine deutlich höhere Granularität der Datenübertragung hinsichtlich der Verteilung der zu übertragenden Daten auf die unterschiedlichen Subbänder, d.h. die Funkressourcen können mit einer großen Feinheit auf die zu übertragenden Daten bzw. auf die Teilnehmerstationen verteilt werden. Insbesondere bei Übertragungen mit variabler Datenrate oder bei bustartigem Datenverkehr kann die Verfügbare Bandbreite durch die Zuweisung einer Anzahl von Subbändern an unterschiedliche Teilnehmerstationen effizient ausgenutzt werden.

Ein Beispiel für ein Mehrträgerübertragungsverfahrens ist OFDM (Orthogonal Frequency Division Multiplexing) System, bei welchem für die Subbänder zeitlich annähernd rechteckige Pulsformen verwendet werden. Der Frequenzabstand der Subbänder wird derart gewählt, dass im Frequenzraum bei derjenigen Frequenz, bei welcher das Signal eines Subbands ausgewertet wird, die Signale der anderen Subbänder einen Nulldurchgang aufweisen. Somit sind die Subbänder orthogonal zueinander. Durch den meist sehr geringen Abstand der Subbänder und der Schmalbandigkeit der auf den einzelnen Subbändern übertragenen Signale OFDM soll gewährleistet werden, dass die Übertragung innerhalb der einzelnen Subbänder im Allgemeinen nicht frequenzselektiv ist. Dies vereinfacht am Empfänger die Signalentzerrung.

Werden einer Teilnehmerstation bei OFDM nicht im Frequenzraum benachbarte Subbänder zugewiesen, sondern Subbänder, welche äquidistant beabstandet sind, wobei dieser Abstand so groß wie möglich gewählt wird, spricht man von Interleaved OFDM. Wird zusätzlich ein Precoding mit einer DFT-Operation verwendet, so entspricht diese precoded OFDM-Variante IFDMA (Interleaved Frequency Division Multiple Access).

Der Erfindung liegt die Aufgabe zugrunde, effiziente Verfahren zur Kommunikation in einem Funkkommunikationssystem aufzuzeigen, in welchem zu Kommunikation zwischen einer netzseitigen Funkstation und Teilnehmerstationen ein in eine Mehrzahl von Subbändern aufgeteiltes Frequenzband verwendet wird. Weiterhin sollen Einrichtungen zur Durchführung des Verfahrens vorgestellt werden.

Diese Aufgabe wird durch ein Verfahren mit den Merkmalen des Anspruchs 1, sowie durch ein Verfahren und Vorrichtungen mit Merkmalen von nebengeordneten Ansprüchen gelöst. Vorteilhafte Ausgestaltungen und Weiterbildungen sind Gegenstand von Unteransprüchen.

Das erfindungsgemäße Verfahren betrifft die Kommunikation in einem Funkkommunikationssystem, in welchem zur Kommunikation zwischen einer netzseitigen Funkstation und Teilnehmerstationen ein in eine Mehrzahl von Subbändern aufgeteiltes Frequenzband verwendet wird. Die netzseitige Funkstation kommuniziert mit einer Teilnehmerstation unter gleichzeitiger Verwendung einer Teilmenge der Subbänder, wobei es sich bei den Subbändern der Teilmenge um im Frequenzbereich durch jeweils die gleiche Anzahl von Subbändern voneinander beabstandete Subbänder handelt. Erfindungsgemäß wechseln die zur Kommunikation verwendeten Subbänder gemäß einer Sprungsequenz unter Beibehaltung der Beabstandung.

Bei der netzseitigen Funkstation handelt es sich vorzugsweise um eine Funkzugangseinrichtung eines zellularen Funkkommunikationssystems. Bei den Teilnehmerstationen kann es sich um stationäre und/oder mobile Endgeräte handeln. Zur Kommunikation zwischen der netzseitigen Funkstation und den Teilnehmerstationen steht ein Frequenzband zur Verfügung, welches in Subbänder aufgeteilt ist. Die Aufteilung erfolgt vorzugsweise derart, dass alle Subbänder gleich breit sind.

Für eine Kommunikation zwischen der netzseitigen Funkstation und einer Teilnehmerstation werden nicht alle Subbänder, sondern eine Teilmenge der Subbänder des Frequenzbandes verwendet. Die Teilmenge umfasst mindestens zwei, vorzugsweise mindestens drei oder vier, Subbänder, welche äquidistant sind. Die zur Kommunikation zwischen der netzseitigen Funkstation und der Teilnehmerstation verwendeten Subbänder bleiben nicht die gleichen, vielmehr ändern sie sich mit der Zeit gemäß einer Sprungsequenz. Eine Sprungsequenz ist hierbei eine Folge von Subbändern, welche sowohl dem Sender als auch dem Empfänger bekannt ist. Die Sprünge zwischen den Subbändern der Sequenz erfolgen zu bestimmten, dem Sender und dem Empfänger bekannten Zeitpunkten, vorzugsweise periodisch. Der Wechsel zwischen den für die Kommunikation verwendeten Subbändern erfolgt unter Beibehaltung der Beabstandung der verwendeten Subbänder, d.h. die Abstände zwischen den Subbändern der Teilmenge ist vor und nach jedem Sprung gleich. Somit bleibt die Beabstandung der verwendeten Subbänder durch jeweils die gleiche Anzahl von Subbändern mit der Zeit konstant.

Die Anzahl der für die Kommunikation verwendeten Subbänder, die Abstände zwischen diesen Subbändern, und die verwendete Sprungsequenz können sich von Teilnehmerstation zu Teilnehmerstation voneinander unterscheiden.

In Weiterbildung der Erfindung ist die Beabstandung der Subbänder der Teilmenge bei gegebener Anzahl von Subbändern des Frequenzbandes und gegebener Anzahl von Subbändern der Teilmenge maximal. Diese Bedingung ist zum Beispiel bei einem IFDM oder Interleaved OFDM Übertragungsverfahren erfüllt.

Bei der Kommunikation kann es sich um eine Nachrichtenversendung von der Teilnehmerstation zu der netzseitigen Funkstation handeln. In diesem Fall werden die Subbänder der Teilmenge zur Nachrichtenübertragung in Aufwärtsrichtung verwendet. Alternativ kann es sich bei der Kommunikation um eine Nachrichtenversendung von der netzseitigen Funkstation zu der Teilnehmerstation handeln. In diesem Fall werden die Subbänder der Teilmenge zur Nachrichtenübertragung in Abwärtsrichtung verwendet.

In Ausgestaltung der Erfindung sendet die netzseitige Funkstation zu der Teilnehmerstation eine Nachricht mit Informationen über die Sprungsequenz. Die Nachricht kann die vollständige Sprungsequenz angeben oder auch Teile derselben. Zusätzlich zu den Informationen über die Sprungsequenz kann die Nachricht weitere die Funkressourcenzuweisung betreffende Informationen enthalten, wie z.B. eine Angabe, wie viele Subbänder die Teilmenge enthält.

Einer bevorzugten Weiterbildung der Erfindung gemäß kommuniziert die netzseitige Funkstation mit einer Mehrzahl von Teilnehmerstationen, wobei für jede Teilnehmerstation der Mehrzahl eine unterschiedliche Sprungsequenz verwendet wird. Zusätzlich ist es möglich, dass die netzseitige Funkstation mit anderen Teilnehmerstationen ohne die Verwendung von Sprungsequenzen kommuniziert.

Vorteilhaft ist es, wenn sich die Anzahlen der Subbänder der Teilmengen in Bezug auf zumindest mache der Teilnehmerstationen voneinander unterscheiden. So ist es beispielsweise möglich, dass die netzseitige Funkstation mit einer Teilnehmerstation auf einem Subband, mit einer anderen Teilnehmerstation auf zwei Subbänder, und mit einer weiteren Teilnehmerstation auf vier Subbändern kommuniziert.

In Ausgestaltung der Erfindung sind die Sprungsequenzen verschiedener Teilnehmerstationen orthogonal zueinander. Die Orthogonalität zweier Sprungsequenzen resultiert darin, dass die entsprechenden Teilnehmerstationen nicht zum gleichen Zeitpunkt die gleichen Subbänder verwenden.

Die Sprungsequenzen können derart ausgestaltet sein, dass ausgehend von einer ersten Sprungsequenz, welche bestimmt ist für eine erste Anzahl von Subbändern pro Teilmenge, eine zweite Sprungsequenz, welche bestimmt ist für eine gegenüber der ersten Anzahl größeren Anzahl von Subbändern pro Teilmenge, durch eine modulo-Operation aus der ersten Sprungsequenz ermittelbar ist. Dies kann für manche oder alle der von der netzseitigen Funkstation verwendeten Sprungsequenzen zutreffen.

In Weiterbildung der Erfindung verwendet die netzseitige Funkstation zur Kommunikation mit Teilnehmerstationen einer erste Gruppe von Sprungsequenzen, und eine andere netzseitige Funkstation verwendet zur Kommunikation mit Teilnehmerstationen eine zweite Gruppe von anderen Sprungsequenzen. Beiden netzseitigen Funkstationen steht in diesem Fall ein Set von Sprungsequenzen zur Verfügung. Jede der beiden netzseitigen Funkstationen nutzt ausschließlich die Sprungsequenzen des eigenen Sets. Bei den beiden netzseitigen Funkstationen kann es sich zum Beispiel um benachbarte netzseitige Funkstationen handeln, welche gegenseitig Interzellinterferenz erzeugen.

Die erfindungsgemäße netzseitige Funkstation weist Mittel auf zum Kommunizieren mit einer Teilnehmerstation unter gleichzeitiger Verwendung einer Teilmenge der Subbänder eines in eine Mehrzahl von Subbändern aufgeteilten Frequenzbandes, wobei es sich bei den Subbändern der Teilmenge um im Frequenzbereich durch jeweils die gleiche Anzahl von Subbändern voneinander beabstandete Subbänder handelt, und wobei die zur Kommunikation verwendeten Subbänder unter Beibehaltung der Beabstandung gemäß einer Sprungsequenz wechseln.

Die erfindungsgemäße Teilnehmerstation weist Mittel auf zum Kommunizieren mit einer netzseitigen Funkstation unter gleichzeitiger Verwendung einer Teilmenge der Subbänder eines in eine Mehrzahl von Subbändern aufgeteilten Frequenzbandes, wobei es sich bei den Subbändern der Teilmenge um im Frequenzbereich durch jeweils die gleiche Anzahl von Subbändern voneinander beabstandete Subbänder handelt, und wobei die zur Kommunikation verwendeten Subbänder unter Beibehaltung der Beabstandung gemäß einer Sprungsequenz wechseln.

Die erfindungsgemäße netzseitige Funkstation und die erfindungsgemäße Teilnehmerstation eignen sich insbesondere zur Durchführung der erfindungsgemäßen Verfahren, wobei dies auch auf die Ausgestaltungen und Weiterbildungen zutreffen kann. Hierzu können sie weitere geeignete Mittel aufweisen.

Im Folgenden wird die Erfindung anhand eines Ausführungsbeispiels näher erläutert. Dabei zeigen:
- Figur 1: einen Ausschnitt aus einem Funkkommunikationssystem,
- Figur 2: die Aufteilung eines Frequenzbandes,
- Figuren 3a-c: eine erste Gruppe von Sprungsequenzen,
- Figuren 4a-d: eine zweite Gruppe von Sprungsequenzen.

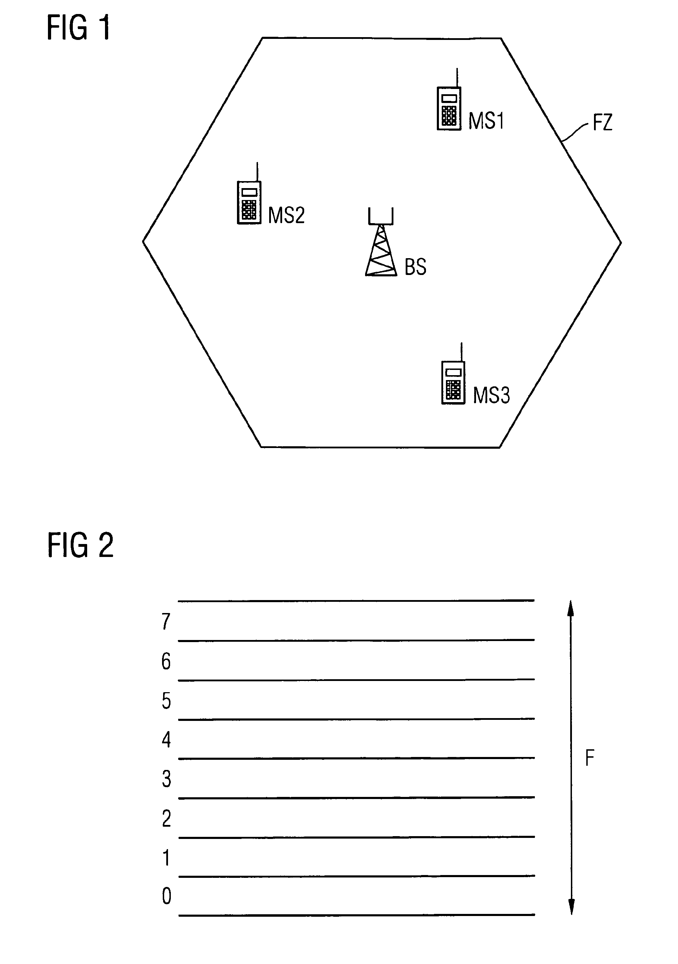

Der in Figur 1 dargestellte Ausschnitt aus einem Funkkommunikationssystem zeigt die Funkzelle FZ der Basisstation BS, schematisch als Sechseck dargestellt, in welcher sich die Teilnehmerstationen MS1, MS2 und MS3 befinden. Bei den Teilnehmerstationen MS1, MS2 und MS3 kann es sich um an sich beliebig ausgestaltete stationäre oder mobile Endgeräte handeln, welche mit der Basisstation BS per Funk kommunizieren können. Bei dem betrachteten Funkkommunikationssystem handelt es sich um ein zellulares System, d.h. es sind weitere Basisstationen in der Nachbarschaft der Basisstation BS vorhanden, welche jedoch nicht in Figur 1 dargestellt sind.

Die Basisstation BS kommuniziert mit den Teilnehmerstationen MS1, MS2 und MS3 unter Verwendung eines in Figur 2 dargestellten Frequenzbandes F. Das Frequenzband F ist in 8 gleich breite Subbänder aufgeteilt, welche in Figur 2 mit den Indizes 0 bis 7 durchnummeriert sind. Für die folgenden Ausführungen wird zur Vereinfachung eine Aufteilung des Frequenzbandes F in 8 Subbänder betrachtet, während in Realität üblicherweise größere Anzahlen von Subbändern eingesetzt werden.

Zur Kommunikation werden einer Teilnehmerstation von der Basisstation BS eines, mehrere oder alle Subbänder des Frequenzbandes F zugewiesen. Es erfolgt keine Zuweisung von beliebigen Kombinationen der Subbänder des Frequenzbandes F an Teilnehmerstationen, vielmehr erfolgt die Kommunikation zwischen der Basisstation BS und den Teilnehmerstationen MS1, MS2 und MS3 unter Verwendung von Interleaved OFDM oder IFDM. Bei diesen Funktechnologien wird jeder Teilnehmerstation eine Teilmenge der Subbänder des Frequenzbandes zugewiesen, welche äquidistant sind und den bei gegebener Anzahl der Subbänder der Teilmenge größtmöglichen Frequenzabstand voneinander aufweisen. Die maximale Beabstandung der Subbänder einer Teilnehmerstation führt zu einer hohen Frequenzdiversität und somit zu einer gesteigerten Übertragungsqualität aufgrund der Frequenzselektivität des Übertragungskanals. Weiterhin resultiert sie in einer niedrigen erforderlichen Rechenkomplexität bei der Signalerzeugung und bei der Trennung von Signalen verschiedener Teilnehmer, wie in
A Filippi, E. Costa, E. Schulz: "Low Complexity Interleaved Sub-carrier Allocation in OFDM Multiple Access Systems", Proc. IEEE VTC 04, Los Angeles, California, USA, September 2004
ausgeführt wird.

Zusätzlich zu den Vorteilen von Interleaved OFDM weist IFDM ein vorteilhaft niedriges Peak-to-Average-Verhältnis auf. Interleaved OFDM und IFDM werden beschrieben zum Beispiel in
T. Frank, A. Klein, E. Costa, E. Schulz: "Interleaved Orthogonal Frequency Division Multiple Access with Variable Data Rates", OFDM Workshop, Hamburg, 31.8.-1.9. 2005.

Die Teilmenge der einer Teilnehmerstation zugewiesenen Subbänder lässt sich durch die folgenden Informationen festlegen:
- die Anzahl der Subbänder, welche der Teilnehmerstation zugewiesen sind,
- den Index eines der Subbänder, welcher als Startindex bezeichnet werden kann,
- eine Berechnungsvorschrift, gemäß welcher die Indizes der anderen Subbänder ausgehend von dem Startindex berechnet werden können.

Wird beispielsweise als Startindex das Subband mit dem kleinsten Index verwendet, so können die anderen Subbandindizes berechnet werden, indem ganzzahlige Vielfache von N/Q zu dem Startindex addiert werden, mit N der Gesamtanzahl der Subbänder und Q der Anzahl der der Teilnehmerstation zugewiesenen Subbänder. Ist beispielsweise der Startindex 1, sind 8 Subbänder vorhanden, und sind der Teilnehmerstation insgesamt 4 Subbänder zugewiesen, so muss jeweils ein ganzzahliges Vielfaches von 2 zum Startindex addiert werden, um die Indizes der anderen Subbänder zu erhalten, welche demnach 3, 5 und 7 betragen.

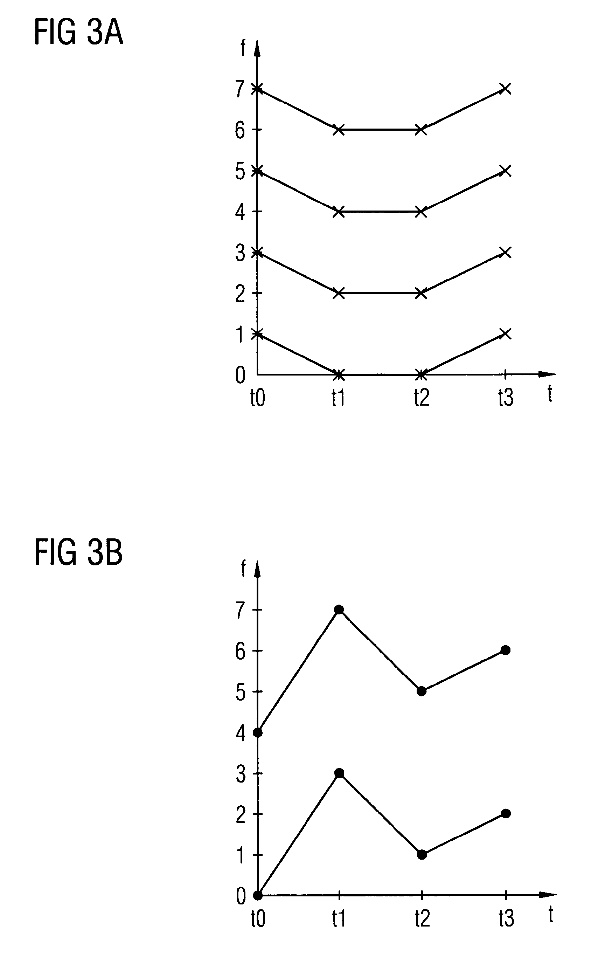

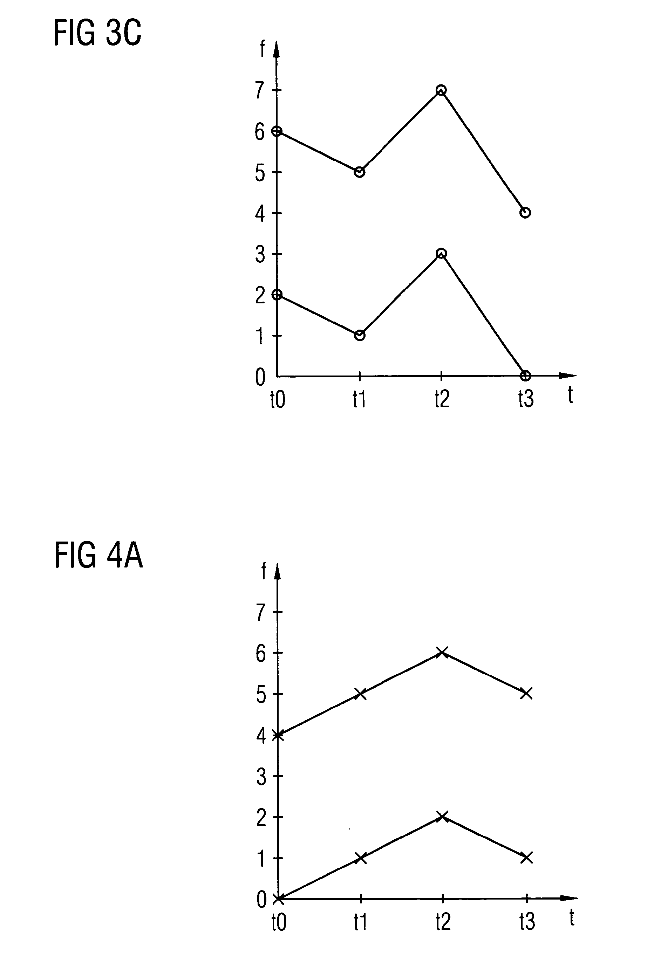

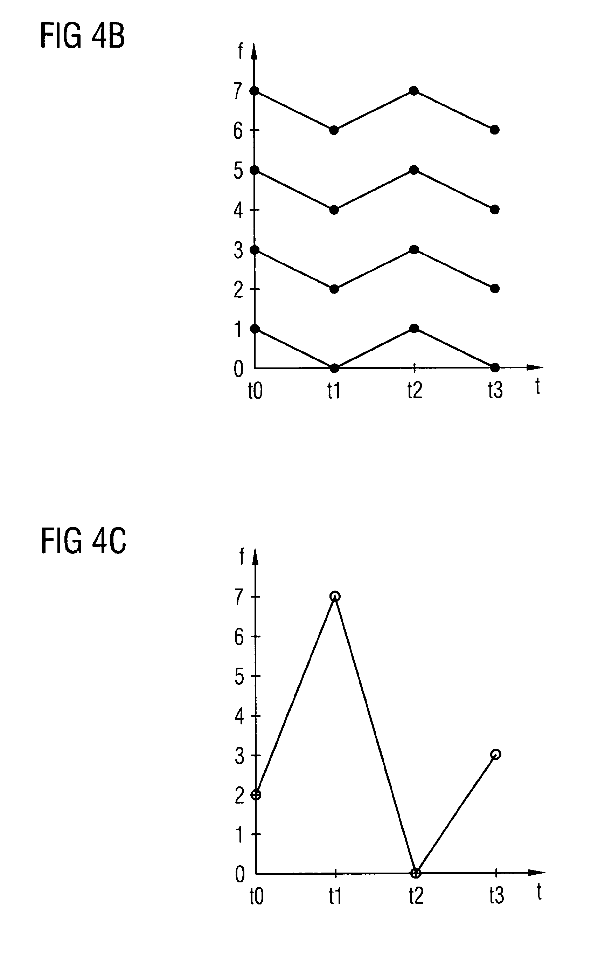

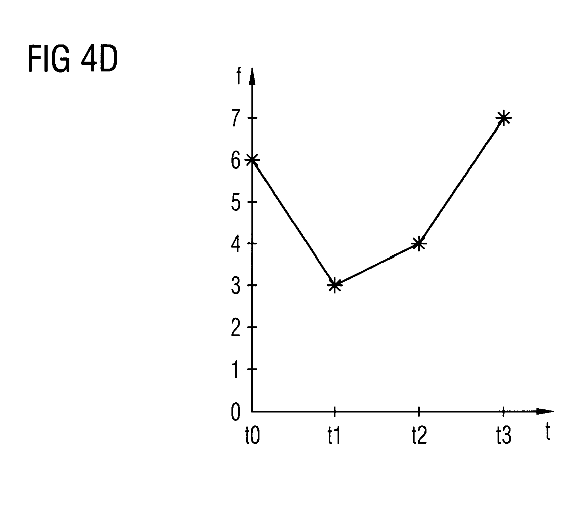

Wie bereits erläutert steht jeder aktuell kommunizierenden Teilnehmerstation zur Kommunikation mit der Basisstation eine Teilmenge der Subbänder des Frequenzbandes F zur Verfügung, welche gemäß Interleaved OFDM oder IFDMA äquidistant sind und den maximal möglichen Frequenzabstand zueinander aufweisen. Die Figuren 3 und 4 zeigen verschiedene mögliche Konstellationen von Subbändern, welche einer Teilnehmerstation zugewiesen werden können. Bei diesen Figuren ist jeweils die Frequenz f nach oben aufgetragen, repräsentiert durch den Subbandindex 0 bis 7, nach rechts ist die Zeit t aufgetragen, wobei die diskreten Zeitpunke t0, t1, t2 und t3 dargestellt sind.

Figur 3a zeigt die Subbänder, welche einer ersten Teilnehmerstation zur Verfügung stehen, Figur 3b die Subbänder, welche einer zweiten Teilnehmerstation zur Verfügung stehen, und Figur 3c die Subbänder, welche einer dritten Teilnehmerstation zur Verfügung stehen. Gemäß Figur 3a stehen der Teilnehmerstation vier Subbänder zur Verfügung. Zum Zeitpunkt t0 handelt es sich hierbei um die Subbänder 1, 3, 5 und 7. Die jeweilige Teilnehmerstation kommuniziert somit ab dem Zeitpunkt t0 mit der Basisstation unter Verwendung der Subbänder 1, 3, 5 und 7. Die der Teilnehmerstation zugewiesenen Subbänder bleiben jedoch nicht konstant, sondern ändern sich mit der Zeit, wobei die Anzahl der zugewiesenen Subbänder konstant bleibt. So stehen der Teilnehmerstation ab dem Zeitpunkt t1 die Subbänder 0, 2, 4 und 6 zur Verfügung, ab dem Zeitpunkt t2 erneut die Subbänder 0, 2, 4 und 6, und ab dem Zeitpunkt t3 die Subbänder 1, 3, 5 und 7. Figur 3a stellt somit eine Sprungsequenz für eine Subbandzuweisung gemäß Interleaved OFDM oder IFDMA dar. Die Sprungsequenz für den Startindex der Figur 3a lautet 1, 0, 0, 1.

Eine zweite Sprungsequenz ist in Figur 3b dargestellt. Der jeweiligen Teilnehmerstation sind 2 Subbänder zugewiesen. Zum Zeitpunkt t0 handelt es sich hierbei um die Subbänder 0 und 4, zum Zeitpunkt t1 um die Subbänder 3 und 7, zum Zeitpunkt t2 um die Subbänder 1 und 5, und zum Zeitpunkt t3 um die Subbänder 2 und 6. Die Sprungsequenz für den Startindex der Figur 3b lautet 0, 3, 1, 2.

Eine dritte Sprungsequenz ist in Figur 3c dargestellt. Der jeweiligen Teilnehmerstation sind 2 Subbänder zugewiesen. Zum Zeitpunkt t0 handelt es sich hierbei um die Subbänder 2 und 6, zum Zeitpunkt t1 um die Subbänder 1 und 5, zum Zeitpunkt t2 um die Subbänder 3 und 7, und zum Zeitpunkt t4 um die Subbänder 0 und 4. Die Sprungsequenz für den Startindex der Figur 3c lautet 2, 1, 3, 0.

Die Zeitdifferenz zwischen den Zeitpunkten t0 und t1, t1 und t2, t2 und t3 kann der Zeitdauer der Übertragung von weniger als einem Datenblock, von einem Datenblock, oder auch die Zeitdauer der Übertragung einer Mehrzahl von Datenblöcken entsprechen. Wesentlich ist, dass diese Zeitdifferenzen für alle Sprungsequenzen und somit für alle Teilnehmerstationen gleich lang sind. Die Sprünge zwischen den verwendeten Subbändern erfolgen somit für alle Teilnehmerstationen synchron.

Die drei in den Figuren 3a bis 3c dargestellten Sprungsequenzen sind orthogonal zueinander. Dies bedeutet, dass zu keinem der Zeitpunkte t0, t1, t2 und t3 ein Subband von mehr als einer Sprungsequenz verwendet wird. Durch diese Eigenschaft der Sprungsequenzen wird die Interferenz zwischen in der betrachteten Funkzelle gesendeten Nachrichten (Intrazellinterferenz) reduziert.

Eine weitere Gruppe von untereinander orthogonalen Sprungsequenzen ist in den Figuren 4a bis 4d dargestellt. Gemäß Figur 4a stehen einer Teilnehmerstation gleichzeitig zwei Subbänder zur Verfügung, die Sprungsequenz für den Startindex lautet 0, 1, 2, 1. Gemäß Figur 4b stehen einer Teilnehmerstation gleichzeitig vier Subbänder zur Verfügung, die Sprungsequenz für den Startindex lautet 1, 0, 1, 0. Gemäß Figur 4c steht einer Teilnehmerstation lediglich ein Subband zur Verfügung, die Sprungsequenz für den Startindex lautet 2, 7, 0, 3. Gemäß Figur 4d schließlich steht einer Teilnehmerstation ein Subband zur Verfügung, die Sprungsequenz für den Startindex lautet 6, 3, 4, 7.

Zur Konstruktion von orthogonalen Sprungsequenzen kann insbesondere das folgende Verfahren Anwendung finden:

Ausgehend von einer Sprungsequenz eines Teilnehmers mit einer niedrigeren Datenrate - entsprechend einer kleineren Anzahl an zugewiesenen Subbändern - wird die Sprungsequenz eines Teilnehmers mit einer höheren Datenrate - entsprechend einer größeren Anzahl an zugewiesenen Subbändern - berechnet. In Bezug auf dieses Subband des Teilnehmers mit der niedrigeren Datenrate wird eine modulo N/Q Operation durchgeführt mit N der Gesamtanzahl der Subbänder und Q der Anzahl der für den Teilnehmer mit der höheren Datenrate benötigten Subbänder. Geht man beispielsweise von der Sprungsequenz 2, 7, 0, 3 der Figur 4c aus, und führt ein modulo 8/4 Operation durch, so gelangt man zur Sprungsequenz 1, 0, 1, 0 der Figur 4b.

Die beiden in den Figuren 3 und 4 dargestellten Sets an Sprungsequenzen weisen den Vorteil auf, dass jeweils Sequenzen für unterschiedliche Datenraten existieren. So sind bei dem Set der Figur 3 zwei Sprungsequenzen für eine zwei Subbändern entsprechende Datenrate vorhanden, und eine Sprungsequenz für eine vier Subbändern entsprechende Datenrate. Gemäß Figur 4 sind zwei Sprungsequenzen für eine einem Subband entsprechende Datenrate vorhanden, und jeweils eine Sprungsequenz für eine zwei und vier Subbändern entsprechende Datenrate. Es ist somit eine flexible Allokation von Funkressourcen an Teilnehmerstationen möglich, wobei der unterschiedliche Datenratenbedarf der Teilnehmerstationen berücksichtigt werden kann.

Vorteilhaft ist es insbesondere in Bezug auf Sprungsequenzen für Teilnehmerstationen mit einer kleinen Anzahl an zugewiesenen Subbändern, wenn ein Startindex sich innerhalb der Sprungsequenz nicht wiederholt. Dies dient der Steigerung der Frequenzdiversität. Dies trifft zum Beispiel zu auf die Sprungsequenz 2, 7, 0, 3 der Figur 4c, sowie auf die Sprungsequenz 6, 3, 4, 7 der Figur 4d, korrespondierend zu einer niedrigeren Datenrate, während es nicht zutrifft auf die Sprungsequenzen 1, 0, 0, 1 der Figur 3a und 1, 0, 1, 0 der Figur 4b, korrespondierend zu einer hohen Datenrate.

Um die Orthogonalität der Sprungsequenzen eines Sets zu bewahren, muss darauf geachtet werden, dass der in de Figuren mit t0 bezeichnete Zeitpunkt, d.h. der Zeitpunkt, zu welchem die Sprungsequenzen "beginnen", für alle verwendeten Sprungsequenzen gleichzeitig stattfindet, d.h. synchronisiert ist. Weisen die Sprungsequenzen wie in den Figuren 3 und 4 gezeigt eine Länge von vier auf, so wird für alle Teilnehmerstationen nach jedem vierten Zeitschlitz mit der jeweiligen Sprungsequenz begonnen.

Von dem Erfordernis der Orthogonalität der Sprungsequenzen eines Sets untereinander kann gegebenenfalls abgewichen werden. In diesem Fall erhöht sich zwar die Anzahl möglicher Sprungsequenzen pro Set, jedoch geht dies einher mit erhöhter Interzellinterferenz.

Die zu verwendende Sprungsequenz muss sowohl dem Sender als auch dem Empfänger bekannt sein. Zu diesem Zweck ist eine Signalisierung von der Basisstation an die jeweilige Teilnehmerstation nötig. Ist der Teilnehmerstation bekannt, wie viele Subbänder ihr zur Verfügung stehen, so reicht es aus, wenn die Sprungsequenz für den Startindex signalisiert wird.

Besonders vorteilhaft ist es, wenn benachbarte Basisstationen bzw. wenn in Funkzellen, welche gegenseitig störende Interferenz (Intrazellinterferenz) erzeugen, verschiedene Sets von Sprungsequenzen zum Einsatz kommen. Beispielsweise kann eine erste Basisstation die Sprungsequenzen der Figur 3 anwenden und eine zweite Basisstation, welche sich in der Umgebung der ersten Basisstation befindet, die Sprungsequenzen der Figur 4. Den beiden Basisstationen ist somit jeweils eine Gruppe von Sprungsequenzen zugewiesen, wobei eine Zuweisung von Funkressourcen an Teilnehmerstationen durch eine Basisstation jeweils ausschließlich aus dem dieser Basisstation zugewiesenen Set an Sprungsequenzen erfolgt.

Bei der Konstruktion von Sets von Sprungsequenzen für verschiedene Funkzellen bzw. bei der Zuweisung von Sets von Sprungsequenzen an verschiedene Funkzellen sollte folgendes beachtet werden, um die Interzellinterferenz zu reduzieren: Bei einem Frequenzwiederholfaktor von 1, d.h. bei einer Verwendung des gleichen Frequenzbandes in benachbarten Funkzellen, werden Subbänder gleichzeitig in den verschiedenen Funkzellen verwendet. Betrachtet man beispielsweise den Zeitpunkt t0 der Figuren 3 und 4, so wird das Subband 1 sowohl von der Sprungsequenz der Figur 3a als auch von der Sprungsequenz der Figur 4b verwendet, so dass die auf dem Subband 1 ausgestrahlten Signale der beiden Funkzellen interferieren. Es ist vorteilhaft, wenn ein Teilnehmer während der Dauer einer Sprungsequenz Interferenz von möglichst vielen unterschiedlichen Teilnehmern der anderen Funkzelle erfährt. Dies erhöht die Interzellinterferenzdiversität, wobei dies aufgrund der Mitteilung zu einem günstigeren Interferenzergebnis für den betrachteten Teilnehmer führt. In Bezug auf den Teilnehmer mit der Sprungsequenz der Figur 3b beispielsweise wird Interzellinterferenz erfahren ab dem Zeitpunkt t0 durch den Teilnehmer mit der Sprungsequenz der Figur 4a, ab dem Zeitpunkt t1 durch die Teilnehmer mit den Sprungsequenzen der Figuren 4c und 4d, und ab den Zeitpunkten t2 und t3 durch den Teilnehmer mit der Sprungsequenz der Figur 4b. Ungünstig ist es, wenn die gleiche Sprungsequenz in benachbarten Funkzellen verwendet wird, da in diesem Fall die Interzellinterferenzdiversität minimal ist.

Aufgrund der reduzierten Interzellinterferenz erhöht sich die Kapazität des Funkkommunikationssystems, d.h. bei gleich bleibender Übertragungsqualität kann die Anzahl an gleichzeitig kommunizierenden Teilnehmerstationen erhöht werden bzw. bei gleich bleibender Anzahl an gleichzeitig kommunizierenden Teilnehmerstationen kann die Übertragungsqualität erhöht werden.

Um die vorteilhaften Korrelationseigenschaften zwischen den Sprungsequenzen verschiedener Sets aufrechtzuerhalten, sollte wie bereits in Bezug auf eine Funkzelle erläutert, Synchronisation vorliegen, d.h. die Zeitpunkt t0 sollten in den verschiedenen Funkzellen die gleiche zeitliche Lage haben.

Bei Verwendung der Sprungsequenzen ist es auch möglich, dass eine Teilnehmerstation gleichzeitig mit mehreren Basisstationen kommuniziert, wobei für die Kommunikation jeweils eine Sprungsequenz aus dem der jeweiligen Basisstation zugewiesenen Set verwendet wird.

Die Sprungsequenzen können für eine Kommunikation zwischen Basisstation und Teilnehmerstationen ausschließlich in Aufwärtsrichtung, ausschließlich in Abwärtsrichtung, oder auch für die Kommunikation in Aufwärts- und Abwärtsrichtung eingesetzt werden.

Während bislang ausgeführt wurde, dass jeder Basisstation ein Set von Sprungsequenzen zugewiesen wird, wobei die jeweilige Basisstation für die Zuweisung von Sprungsequenzen aus diesem Set an Teilnehmerstationen in ihrer Funkzelle zuständig ist, ist es auch möglich, dass die Zuweisung des Sets an eine der Basisstation übergeordnete Einrichtung erfolgt, welche für die Zuordnung von Sprungsequenzen zu Teilnehmerstationen zuständig ist.

## Patentansprüche

1. Verfahren zur Kommunikation in einem Funkkommunikationssystem, in welchem zur Kommunikation zwischen einer netzseitigen Funkstation (BS) und Teilnehmerstationen (MS1, MS2, MS3) ein in eine Mehrzahl von Subbändern aufgeteiltes Frequenzband (F) verwendet wird,
bei dem die netzseitige Funkstation (BS) mit einer Teilnehmerstation (MS1, MS2, MS3) unter gleichzeitiger Verwendung einer Teilmenge der Subbänder kommuniziert,
wobei es sich bei den Subbändern der Teilmenge um im Frequenzbereich durch jeweils die gleiche Anzahl von Subbändern voneinander beabstandete Subbänder handelt,
**dadurch gekennzeichnet,**
**dass** die zur Kommunikation verwendeten Subbänder gemäß einer Sprungsequenz unter Beibehaltung der Beabstandung wechseln.

2. Verfahren nach Anspruch 1, bei dem
die Beabstandung der Subbänder der Teilmenge bei gegebener Anzahl von Subbändern des Frequenzbandes (F) und gegebener Anzahl von Subbändern der Teilmenge maximal ist.

3. Verfahren nach Anspruch 1 oder 2, bei dem
es sich bei der Kommunikation um eine Nachrichtenversendung von der Teilnehmerstation (MS1, MS2, MS3) zu der netzseitigen Funkstation (BS) handelt.

4. Verfahren nach Anspruch 1 oder 2, bei dem
es sich bei der Kommunikation um eine Nachrichtenversendung von der netzseitigen Funkstation (BS) zu der Teilnehmerstation (MS1, MS2, MS3) handelt.

5. Verfahren nach einem der Ansprüche 1 bis 4, bei dem
die netzseitige Funkstation (BS) zu der Teilnehmerstation (MS1, MS2, MS3) eine Nachricht mit Informationen über die Sprungsequenz sendet.

6. Verfahren nach einem der Ansprüche 1 bis 5, bei dem
die netzseitige Funkstation (BS) mit einer Mehrzahl von Teilnehmerstationen (MS1, MS2, MS3) kommuniziert, wobei für jede Teilnehmerstation (MS1, MS2, MS3) der Mehrzahl eine unterschiedliche Sprungsequenz verwendet wird.

7. Verfahren nach Anspruch 6, bei dem
sich die Anzahlen der Subbänder der Teilmengen in Bezug auf zumindest manche der Teilnehmerstationen (MS1, MS2, MS3) voneinander unterscheiden.

8. Verfahren nach Anspruch 6 oder 7, bei dem
die Sprungsequenzen verschiedener Teilnehmerstationen (MS1, MS2, MS3) orthogonal zueinander sind.

9. Verfahren nach einem der Ansprüche 6 bis 8,bei dem
die Sprungsequenzen derart ausgestattet sind, dass ausgehend von einer ersten Sprungsequenz, welche bestimmt ist für eine erste Anzahl von Subbändern pro Teilmenge, eine zweite Sprungsequenz, welche bestimmt ist für eine gegenüber der ersten Anzahl größeren Anzahl von Subbändern pro Teilmenge, durch eine modulo-Operation aus der ersten Sprungsequenz ermittelbar ist.

10. Verfahren nach einem der Ansprüche 1 bis 9, bei dem
die netzseitige Funkstation (BS) zur Kommunikation mit Teilnehmerstationen (MS1, MS2, MS3) eine erste Gruppe von Sprungsequenzen verwendet, und eine andere netzseitige Funkstation (BS) zur Kommunikation mit Teilnehmerstationen (MS1, MS2, MS3) eine zweite Gruppe von anderen Sprungsequenzen verwendet.

11. Verfahren zur Kommunikation in einem Funkkommunikationssystem, in welchem zur Kommunikation zwischen einer netzseitigen Funkstation (BS) und Teilnehmerstationen (MS1, MS2, MS3) ein in eine Mehrzahl von Subbändern aufgeteiltes Frequenzband (F) verwendet wird,
bei dem eine Teilnehmerstation (MS1, MS2, MS3) mit der netzseitigen Funkstation (BS) unter gleichzeitiger Verwendung einer Teilmenge der Subbänder kommuniziert,
wobei es sich bei den Subbändern der Teilmenge um im Frequenzbereich durch jeweils die gleiche Anzahl von Subbändern voneinander beabstandete Subbänder handelt,
**dadurch gekennzeichnet,**
**dass** die zur Kommunikation verwendeten Subbänder unter Beibehaltung der Beabstandung gemäß einer Sprungsequenz wechseln.

12. Netzseitige Funkstation (BS) für ein Funkkommunikationssystem,
mit Mitteln zum Kommunizieren mit einer Teilnehmerstation (MS1, MS2, MS3) unter gleichzeitiger Verwendung einer Teilmenge der Subbänder eines in eine Mehrzahl von Subbändern aufgeteilten Frequenzbandes (F),
wobei es sich bei den Subbändern der Teilmenge um im Frequenzbereich durch jeweils die gleiche Anzahl von Subbändern voneinander beabstandete Subbänder handelt,
**dadurch gekennzeichnet,**
**dass** die zu Kommunikation verendeten Subbänder unter Beibehaltung der Beabstandung gemäß einer Sprungsequenz wechseln.

13. Teilnehmerstation (MS1, MS2,MS3) für ein Funkkommunikationssystem,
mit Mitteln zum Kommunizieren mit einer netzseitigen Funkstation (BS) unter gleichzeitiger Verwendung einer Teilmenge der Subbänder eines in eine Mehrzahl von Subbändern aufgeteilten Frequenzbandes (F),
wobei es sich bei den Subbändern der Teilmenge um im Frequenzbereich durch jeweils die gleiche Anzahl von Subbändern voneinander beabstandete Subbänder handelt,
**dadurch gekennzeichnet,**
**dass** die zur Kommunikation verwendeten Subbänder unter Beibehaltung der Beabstandung gemäß einer Sprungsequenz wechseln.
